# EUROPEAN PATENT SPECIFICATION

(11) **EP 3 693 568 B1**
(45) Date of publication and mention of the grant of the patent: **20.09.2023**
(21) Application number: 17927696.9
(22) Date of filing: 27.09.2017
(51) Int. Cl.: F02B 13/00, F02B 63/00, F03G 7/00, F03G 7/04, F03B 13/00, H02J 15/00, F03B 17/00

(54) **SYSTEM AND METHOD FOR ENERGY STORAGE AND GENERATION, WHEREIN PRESSURE IS RELEASED IN A LIQUID CIRCUIT WHICH IN TURN DRIVES A LIQUID TURBINE FOR ENERGY GENERATION**
SYSTEM UND VERFAHREN ZUR ENERGIESPEICHERUNG UND -ERZEUGUNG, WOBEI DRUCK IN EINEM FLÜSSIGKREISLAUF FREIGESETZT WIRD, DER WIEDERUM EINE FLÜSSIGTURBINE ZUR ENERGIEERZEUGUNG ANTREIBT
SYSTÈME ET PROCÉDÉ POUR STOCKER ET PRODUIRE DE L'ÉNERGIE, DANS LESQUELS UNE PRESSION EST LIBÉRÉE DANS UN CIRCUIT DE LIQUIDE QUI À SON TOUR DÉPLACE UNE TURBINE DE LIQUIDE POUR GÉNÉRER DE LÉ'NERGIE

(43) Date of publication of application: 12.08.2020
(73) Proprietor: Universidad Tecnica Federico Santa Maria, Valparaíso (CL)
(72) Inventor: ROMERO, Christian, Casa Blanca (CL); ALIAGA, David, Santiago (CL); BUNOUT, Pablo, Valparaíso (CL)
(74) Representative: Ungria López, Javier
(86) International application number: PCT/CL2017/050055
(87) International publication number: WO 2019/061002

(56) References cited:
- WO-A1-2011/139171
- DE-A1-102012 015 732
- US-A- 5 579 700
- US-A1- 2008 163 618
- US-A1- 2009 282 840
- US-A1- 2011 288 688
- US-A1- 2011 288 688
- US-B1- 7 579 700
- US-B2- 6 672 054
- US-B2- 8 061 132

## Description

### FIELD OF APPLICATION

The present invention concerns energy storage, more specifically a short cycle energy generation and storage system at constant pressure (liquid - gas), more specifically to a system and method that uses compressed gas to pressurize a liquid tank that in turn actuates a liquid turbine to produce electrical energy. The storage is done by storing compressed gas at a high pressure in small or medium high-pressure containers.

### DESCRIPTION OF PRIOR ART

Solar and wind energy are great candidates for massive electricity generation in the future. However, peak electricity generation times for both often do not coincide with the peak hours of user demand. Therefore, the profitable use of solar and wind energy necessarily involves finding a cost-effective way of storing the surplus energy and releasing it to the power grid when needed. To address this issue, many avenues have been explored. One is to use the electricity surplus to pump water into tanks located at height, from which by allowing it to descend later it is possible for the system to behave like a waterfall harnessed by hydroelectric power plants. Another is to resort to electrochemical batteries, however, the existing cost of battery technology is still high.

For the above reasons, it has become the primary objective to store energy at the lowest possible cost. According to Yao E, Wang H, Liu L, Xi G. "A novel constant-pressure pumped hydro combined with compressed air energy storage system". Energies 2015;8:154-71 and Erren Yao, Huanran Wang, Ligang Wang, Guang Xi, Francois Maréchal, "Thermo-economic optimization of a combined cooling, heating and power system based on small-scale compressed air energy storage". Energy Conversion and Management 118 (2016) 377-386, the only technology that has the capability to reach 400 USD/kW per installed power is the " virtual dam" approach.

The "Virtual Dam" is not a new concept, it was coined in 2011 in some academic publications, another term used in this sense is that of "virtual head".

Several patent documents suggest similar solutions that utilize gas pressure to store energy, see for example patent US8359856 B2, entitled "Systems and methods for efficient pumping of high-pressure fluids for energy storage and recovery", describes a mechanical assembly and/or storage vessel that is coupled in a fluid manner to a circulation device in order to receive pressurized-heat-transfer-fluid from an outlet into a first elevated pressure, increasing a heat-transfer pressure fluid to a second pressure higher than the first pressure and to return the heat-transfer fluid to a third pressure inlet.

Patent document US8037678 B2, titled "Energy storage and generation systems and methods using coupled cylinder assemblies", describes a system for energy storage and recovery through the expansion and compression of a gas and that is suitable for the efficient use and conservation of energy resources.

Patent document US2011288688 A1, titled "System and method for generating electric power", describes a reversible system for generating electric power only during a periodically occurring operational time period, including a first reservoir initially containing a predetermined volume of water, a second reservoir initially being substantially empty, a turbine selectively connectable to the fist and second reservoirs through multiple valves, and a generator connected to the turbine to generate electric power.

Patent document US7579700 B1, titled "System and method for converting electrical energy into pressurized air and converting pressurized air into electricity", describes a system to convert electricity into pressurized air, and to convert pressurized air into electricity. The system includes a pressurized air reservoir, two high pressure tanks, one pump and an electric motor convertible into a hydraulic turbine and an electricity generator, a volume of water equal to the volume of a tank, a set of controllable valves to independently connect and disconnect each tank to the atmosphere, to the entrance and exit of the pump, and to the air reservoir. During use, a volume of water is pumped from the first tank to the second tank, the air in the second tank is compressed and flows into the air reservoir. Changing the position of the valves, the operation is repeated with opposite functions of the tanks. In an electricity generation mode, the system works by transferring pressurized air from the air reservoir into the first tank that is filled with water, flowing the pressurized water through the hydraulic turbine generator generating electricity. The main characteristic that separates said patent with the present invention is the fact that the constant pressure is managed by a control mechanism and is not subject to deposit sizes. Another important difference is that a liquid pump is not used, the pressure is generated with an external compressor.

Furthermore, the present invention does not store energy in huge caverns or large artificial tanks to store the pressure; pressure can be controlled through artificial means; land use is minimized; has a distributed energy storage approach, and therefore without a monstrous size installation.

This is in accordance with Boyle's law. Indeed, if we store air at a pressure P = 2P₀, then the required volume decreases linearly, when compared to the storage of this same air at P₀. This capability to maintain pressure in artificial tanks that are extremely resistant is what allows the possibility of having 1 [MW] of energy in a small area.

### SUMMARY OF THE INVENTION

The present invention is a system and a method that uses a pressurized working fluid, such as compressed air, or liquid air, i.e. air at cryogenic temperature that is stored at atmospheric pressure and that when injected into the liquid tanks it heats up and increases its volume between 600 and 800 times, thus generating pressure to pressurize a liquid-tank, which in turn actuates a liquid turbine to produce electric energy. The storage is done by storing the working fluid at a high pressure in small high-pressure vessels. These vessels are available on today's market. They can be made of carbon fibers, or advanced metal alloys, or any high-resistance composite material.

According to one modality, the pressure is generated by a compressor during low energy-production hours, if the energy of the network is used. But it can also be provided by other energy sources, such as photovoltaic installations, windmills, etc.

It is also possible to consider a plant that generates compressed air or other gas with unused pressure, this pressure can be used to actuate the present invention by external sources.

Therefore, the present invention can store energy in the form of pressure. The pressure is released, when necessary, into a liquid circuit which in turn moves a liquid turbine. This liquid could be water and the gas under pressure can be air or nitrogen. Generally speaking, a liquid is any liquid that is not miscible with the gas that provides the pressure.

According to the above, a first objective is to provide a system to store and generate energy, where a pressure, preferably of compressed gas, is released into a liquid circuit which in turn moves a liquid turbine to generate energy, which comprises a compressor; a high-pressure primary tank; a first main liquid tank and a second main liquid tank; an auxiliary liquid tank; a liquid turbine located between the first and second main tanks and at a lower level than the level of the bottom of the first and the second main tanks and auxiliary tank, to ensure that the pressurized working fluid forces the liquid through the turbine and not in the opposite sense; a network of pipes with their respective valves, both inlet valves, outlet valves, control valves as well as ventilation valves; where the operation is done in short cycles and at a constant pressure by means of a control system that acts on at least one pressure regulating valve.

As an additional objective, a method for storing and generating energy is provided, where a pressure, preferably of compressed gas, is released in a liquid circuit which in turn moves a liquid turbine to generate power, which comprises the following stages:
(a) provide a system comprising, optionally, a compressor and a high pressure primary tank, furthermore, comprises a first main liquid tank with a predetermined level of liquid in its interior and a second main tank of liquid without liquid in its interior; an auxiliary tank of liquid with a predetermined liquid level in its interior; a liquid turbine located between the first and second main tanks and at a level lower than the bottom level of the first and second main tanks and auxiliary tank, to ensure that the underpressure working-fluid forces the liquid through the turbine and not in the opposite sense; a network of pipelines with their respective valves, both inlet valves, outlet valves, control valves as well as ventilation valves; where the operation takes place in short cycles and at a constant pressure by means of a control system that acts on at least one pressure-regulating valve;
(b) optionally, to pressurize the high-pressure primary tank by means of the compressor or to store a gas or a gas mixture at cryogenic temperature, if the system comprises such a compressor and high-pressure primary tank;
(c) to pressurize at an operating or working pressure the first main tank, the auxiliary tank and the network of pipes;
d) to open the first main tank to turbine outlet valve, the second main tank inlet valve and the second main tank ventilation valve, so that the liquid is moved from the first main tank, through the first main tank to turbine outlet valve, up to the turbine and then, through the second main tank inlet valve, it is discharged into the second main tank, while the second main tank ventilation valve allows that the second main tank is filled without increasing the pressure;
(e) to control the pressure in the first main tank through a first main tank control valve which controls the pressure as the liquid level decreases, ensuring in this manner, a stable working pressure;
(f) to close the outlet valves from the first main tank to turbine outlet valve, second main tank inlet valve and second main tank ventilation valve, and to open the auxiliary tank to turbine outlet valve in order to allow that the auxiliary tank feeds the turbine during the transition from one discharge mode to another, while a new operation cycle is initiated;
(g) to open the first main tank ventilation valve and pressurize the second main tank to the operation pressure by means of a second main tank control valve;
h) to open first main tank inlet valve so that the flow can be discharged into the first main tank which is already ventilated or is at atmospheric pressure;
i) to open the auxiliary tank ventilation valve in order to ventilate the pressure from the empty auxiliary tank and to close the auxiliary tank to turbine outlet valve;
j) to open the second main tank to turbine outlet valve in order to feed the turbine from the liquid that comes from the discharge of the second main tank;
k) to close the first main tank to auxiliary tank outlet valve when the auxiliary tank is with the predetermined liquid level of stage a), where this condition is given when the liquid level of the first main tank has reached the necessary level to allow that the liquid enters in the auxiliary tank, e.g. by gravity;
l) to control the pressure of the second main tank through the second main tank control valve which controls the pressure as the liquid level decreases, thus ensuring a stable working pressure; and
m) to close all opened valves and start the stages from stage d) up to stage m).

According to one mode of the invention, the control system which acts on at least one pressure regulating valve, maintaining control over the working pressure of the whole system, also acts on the control of the other system components, such as inlet, outlet, ventilation and control valves, where such control system is configured to execute the method of the invention.

On the other hand, although the invention contemplates the implementation of actuators and level and/or pressure sensors, among others, as part of the proposed control system, the use of said components shall not be considered as a restriction to the invention, every time their use is usual in the technical field of the invention.

### BRIEF DESCRIPTION OF THE FIGURES

Figure 1 shows a general scheme of the system of the present invention.
Figure 2 shows a functioning scheme, where the system of the present invention is ready to start generating energy.
Figure 3 shows the system of the present invention where the first main tank has been emptied, the auxiliary tank has to maintain the power generation while the first main tank and the second main tank are prepared to reverse the flow.
Figure 4 shows the system of the present invention where the auxiliary tank has been emptied and the second main tank has been filled.
Figure 5 shows an intermediate operation stage where once the level of liquid in the first main tank is high enough, the liquid will fill the auxiliary tank. When this stage has been finished, the system will be in the startup configuration shown in figure 2.

### DETAILED DESCRIPTION OF THE INVENTION

The present invention has two main interacting parts. On one hand, we have a working fluid under pressure, for example, a gas, and on the other we have a liquid. Therefore, the present invention is a system and a method that uses a pressurized-working fluid, such as a compressed gas (for example air), to pressurize tanks with liquid (for example water) which in turn actuate a liquid turbine to produce electrical energy. However, the most relevant issue for the efficient production of energy is the capability to maintain a constant pressure. The pressure is monitored with pressure sensors and if more pressure is needed in the system as the liquid is discharged, the control system can react and maintain the desired working conditions by actuating on at least one pressure-regulating valve that provides the working pressure to the system.

The tanks that contain liquid are small. This means that for prolonged functioning time periods the system can work in cycles.

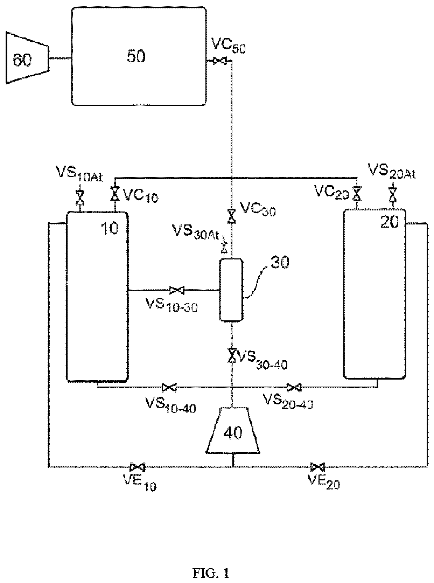

As shown in Figure 1, the system comprises two liquid tanks or liquid reservoirs, a first main tank (10) and a second main tank (20) and, in addition, at least one auxiliary tank (30) of liquid that functions between cycles to give the system time to restart the cycle without loss of energy generation. An alternative system configuration is with three main tanks or liquid reservoirs, thus eliminating the auxiliary tank.

The system can also comprise a primary tank (50), which corresponds to a high-pressure vessel with a pressure that ranges between 30 and 300 [bar]. This main tank (50) feeds a primary pressure line that is operating at a lower pressure, e.g. 8 [bar]. This pressure does not exclude other working pressures, neither higher nor lower.

Taking 8 [bar] as the reference pressure and water as the reference liquid, the pressure is optionally supplied by a compressor (60). If there is a pressure derived from other processes, this pressure can be used to generate electricity, thus the shown compressor would not be necessary.

This pressure of 8 [bar] is connected, via piping and at least one pressure-regulating valve to the first (10) and second (20) main tanks with a first main tank control valve (VC₁₀) and a second main tank control valve (VC₂₀), and also to the auxiliary tank (30) via an auxiliary tank control valve (VC₃₀). Both liquid inputs and liquid outlets between the first (10) and second (20) main tanks, the auxiliary tank (30) and a turbine (40) have their own valves, which are controlled by an electronic system (not shown).

All the liquid tanks (10, 20, 30) are connected at their bottom part by pipes to the turbine (40). This ensures that the pressurized working fluid will force the liquid through the turbine (40) and not in the opposite sense.

There is a second pipe after the turbine (40) to allow that the flow goes from the first main tank (10), through the opening of an first tank inlet valve (VE₁₀), to the second main tank (20) through the opening of a second main tank inlet valve (VE₂₀) or in reverse order.

Each of the liquid tanks (10, 20, 30) has a ventilation valve (VS_{10At}, VS_{20At}, VS_{30At}) that connects the inside with the outside, thus establishing an atmospheric pressure. Said valves are also controlled by an electronic system (not shown).

The auxiliary tank (30) is small compared to the first main tank (10) and the second main tank (20). The purpose of the auxiliary tank (30) is to operate intermittently, e.g. for 20 to 40 seconds, while the system is changing its operating direction in one direction or in the opposite direction. The auxiliary tank (30) can only be omitted if there is an alternative way to manage the downtime in the switching operation. One alternative way would be to operate the system with 3 main tanks, without an auxiliary tank.

The size of the first (10) and second (20) main tanks determines the cycle time. If you wish to operate the first main tank (10) or the second main tank (20) for 3 minutes, then the main tanks have a given size. If it is more suitable for this time to be of 6 minutes, then the main tanks have to be resized to that capacity.

The total operating time is set by the pressure and the size of the high-pressure primary tank (50) or by the pressure and the flow of the working fluid under pressure. According to one modality, it is estimated that this system can produce 1 [MW] for 4 hours using only 200 m² of terrain. The use of terrain can be reduced if the tanks are made taller.

According to one modality, the high-pressure primary tank (50) is pressurized by means of a compressor (60) through solar energy, or low-cost energy from the grid, or any other convenient way. It can also be pressurized by non-conventional compressors. In accordance with another modality, the primary tank (50) has primary tank pressure-regulating valve (VC₅₀) to control the working pressure that said tank delivers to the entire system.

The first main tank (10) is filled with liquid as is the auxiliary tank (30), while the pressure is set at, for example, 8 [bar] through one or more pressure regulating valves. The first main tank to turbine outlet valve (VS₁₀₋₄₀) is opened and the second main tank inlet valve (VE₂₀) is also opened, which passes through the turbine (40), where the second main tank (20) operates as a discharge tank. The second main tank ventilation valve (VS_{20At}) is opened, thus having an atmospheric pressure in the second main tank (20).

For the duration of the discharge, the only working elements are the pressure control in the first main tank (10), maintaining a constant working pressure.

When the first main tank (10) approaches its lower limit, the first main tank to turbine outlet valve (VS₁₀₋₄₀) is closed and the auxiliary tank (30) takes over, where the auxiliary tank to turbine outlet valve (VS₃₀₋₄₀) opens. This creates a time window, and energy is still being generated. During this window, the first main tank (10) is ventilated at atmospheric pressure, opening the first main tank ventilation valve (VS_{10At}), while the second main tank (20) is pressurized to, for example, 8 [bar].

When the auxiliary tank (30) reaches its lowest level, the second main tank to turbine outlet valve (VS₂₀₋₄₀) and first main tank inlet valve (VE₁₀) are opened so that the flow from the second main tank (20) passes through the turbine (40) and is discharged into the first main tank (10). Along with that, the auxiliary tank to turbine outlet valve (VS₃₀₋₄₀) is closed so that the auxiliary tank (30) is also recharged with liquid and pressure, for the next cyclical event.

To reduce losses during the transition from one discharge mode to another, the auxiliary tank (30) can be adjusted to a slightly higher pressure. This compensates for the possible losses generated by the switching. According to one modality, the auxiliary tank (30) is forced to discharge liquid into the first main tank (10) that is lowering the pressure, but that has not yet reached atmospheric pressure.

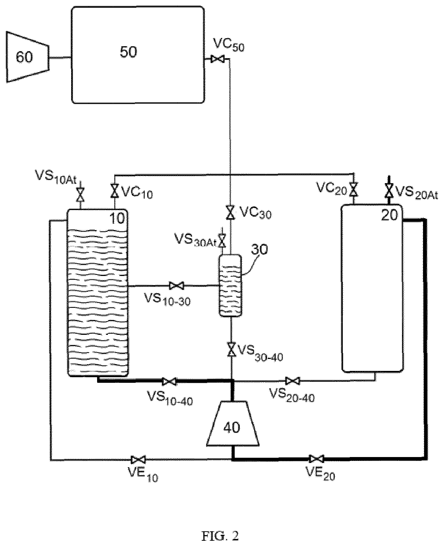

Figure 2 shows the status of the system when it is ready to start generating energy. The first main tank (10) and the auxiliary tank (30) are full of liquid, for example, water. Both are at a working pressure. The pressure is provided through the connection of pipes that reach the top of each tank, while the first main tank to turbine outlet valve (VS₁₀₋₄₀), the second main tank inlet valve (VE₂₀) that passes through the turbine (40) and the second main tank ventilation valve (VS_{20At}) are open. All other valves are closed. The liquid goes from the first main tank (10), through the first main tank to turbine outlet valve (VS₁₀₋₄₀), to the turbine (40). Then, through the second main tank inlet valve (VE₂₀) it is discharged into the second main tank (20). The second main tank ventilation valve (VS_{20At}) remains open. This allows the second main tank (20) to be filled without increasing the pressure. The first main tank (10) has a control valve (VC₁₀) that controls the pressure as the liquid level decreases, thus ensuring a stable working pressure. The path taken by the liquid is shown in figure 2 by means of a thicker layout of the pipes connecting the various components.

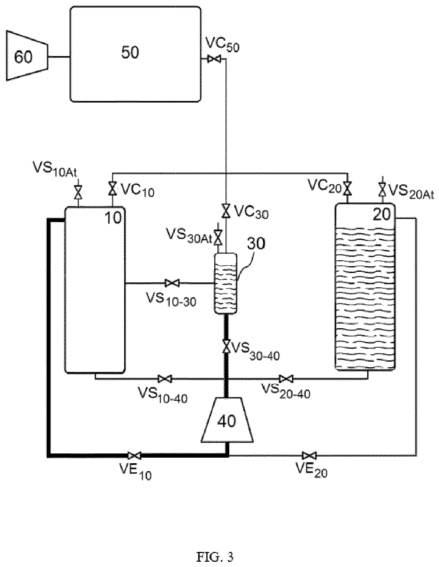

As shown in figure 3, the system of the present invention has emptied the first main tank (10). Now the auxiliary tank (30) has to take over the energy generation while the first main tank (10) and the second main tank (20) are prepared to reverse the flow. All the valves are closed. The first main tank ventilation valve (VS_{10At}) is open to allow that the pressure in the first main tank (10) equalizes atmospheric pressure, the auxiliary tank to turbine output valve (VS₃₀₋₄₀) is open to allow that the auxiliary tank (30) feeds the turbine (40). The first main tank inlet valve (VE₁₀) is opened so that the flow can be discharged into the first main tank (10) which is already in the ventilation process. The second main tank control valve (VC₂₀) is opened to increase the pressure in the second main tank (20). The liquid path is shown in Figure 3 by a thicker pipe layout that connects the various components.

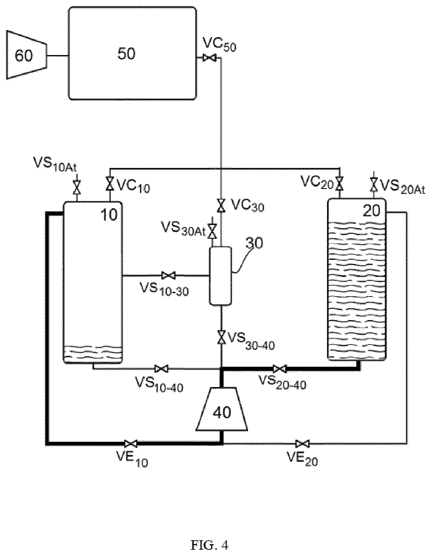

In figure 4, the auxiliary tank (30) has been emptied, and the liquid has already been deposited in the first main tank (10). The first main tank ventilation valve (VS_{10At}) remains open to allow the liquid to be discharged from the second main tank (20) without generating pressure inside the first main tank (10). The first main tank to auxiliary tank outlet valve (VS₁₀₋₃₀) is open to ventilate the pressure from the auxiliary tank (30), this remains open to fill the auxiliary tank (30) with liquid when the liquid level in the first main tank (10) has reached the level necessary to allow that the liquid enters the auxiliary tank (30), in this example by gravity. The second main tank turbine outlet valve (VS₂₀₋₄₀) is open to feed the turbine (40), the first main tank inlet valve (VE₁₀) remains open to allow that the flow is discharged into the first main tank (10). The second main tank control valve provides the necessary pressure to the second main tank (20) as the liquid level decreases. This allows that the second main tank (20) has a stable pressure condition. The liquid path is shown in figure 4 by a thicker pipe layout connecting the various components. If an overpressure is detected in the auxiliary tank (30), the auxiliary tank ventilation valve (VS_{30At}) can be opened to discharge this overpressure.

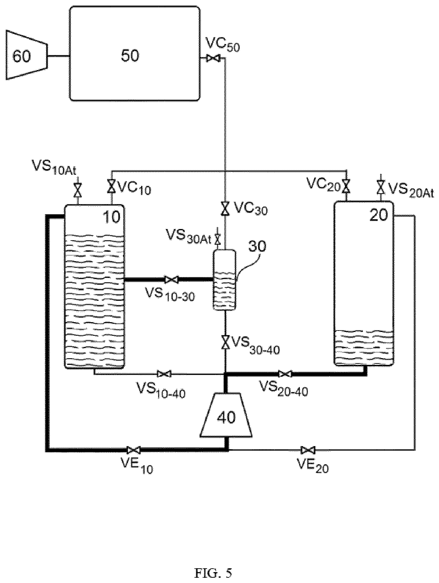

Figure 5 shows the partial filling of the first main tank (10) and the filling of auxiliary tank (30). The intermediate step shown in figure 5 is the fact that once the liquid level in the first main tank (10) is high enough, the liquid fills the auxiliary tank (30). The auxiliary tank ventilation valve (VS_{30At}) is opened to allow filling of the auxiliary tank (30). When this stage is finished, the system is in the initial configuration shown in figure 2. The liquid path is shown in figure 5 by a thicker layout of the pipes connecting the various components.

Additional improvements can be made to retain some of the pressure discharge being vented into the atmosphere. This energy loss represents 9 to 15% depending on the working pressure at which the system of the present invention is operating.

### APPLICATION EXAMPLE

If one wishes to generate energy with a Francis turbine that produces 1.2 [MW], with a water column of 60 [m], a flow rate of 1.24 [m³/s], with first and second main tanks of liquid, in this case water, containing 350 [m³] each, with an auxiliary tank of 25 [m³], with a duration of 4 hours, then a working pressure of 8 [bar] is needed, the discharge time from the first main tank (10) to the second main tank (20) is approximately 4.5 minutes. The auxiliary tank (30) provides a 20 second window to make the switch over. Approximately 54 cycles are required to operate for 4 hours.

If you want to store the pressure at 100 [bar], you need a high-pressure primary tank (50) of approximately 1000 [m³]. If the pressure is stored at 200 [bar], a high-pressure primary tank (50) of approximately 535 [m³] is required. The high-pressure primary tank (50) preferably has a cylindrical shape of approximately 10 meters high and a radius of 4 meters.

The present invention can be used to store energy and produce electricity under demand. In addition, an objective for land and power usage have been presented.

## Claims

1. A system for storing and generating energy, where a pressure generated by a working fluid is released into a liquid circuit which in turn moves a liquid turbine to generate energy, the system comprising:
a first main tank (10) of liquid;
a second main tank (20) of liquid;
an auxiliary tank (30) of liquid;
and whereby the liquid turbine (40) is located between the first (10) and second (20) main tanks, and at a lower level than the bottom of the first (10) and second (20) main tanks and the auxiliary tank (30), to ensure that the pressure inside the tanks forces the liquid through the turbine (40) and
a network of pipelines with their respective valves, including inlet valves, outlet valves, control valves as well as ventilation valves; where the operation is performed in short cycles and at a constant working pressure by means of a control system acting on at least one pressure regulating valve, which provides the working pressure of the system;
**characterized in that** the auxiliary tank (30) is arranged to operate and feed the turbine (40) only intermittently, between cycles, while the system is changing its operating direction in one direction or in the opposite direction, to give the system time to restart the cycle without loss of energy generation.

2. The system for storing and generating energy according to claim 1 **characterized in that** the pressure inside the tanks is generated by compressed air.

3. The system to store and generate energy according to claim 2, **characterized in that** it also includes a compressor (60) and a high-pressure primary tank (50) for the production of the compressed air.

4. The system to store and generate energy according to claim 2, **characterized in that** the compressed air is provided by compressed-air remnants from external sources.

5. The system to store and generate energy according to claim 1, **characterized in that** the pressure inside the tanks is generated by a cryogenic liquid which, when injected into the tanks, heats-up and expands, generating pressure.

6. The system to store and generate energy according to claim 1, **characterized in that** the respective valves of said pipeline network are opened or closed to allow the movement of liquid flow between the first main tank and the second main tank (20) through the turbine (40).

7. The system to store and generate energy according to claim 1, **characterized in that** such auxiliary tank (30) only works while the system is changing from operating in one direction or in the opposite direction, for the transfer of liquid between the first main tank (10) and second main tank (20).

8. The system to store and generate energy according to claim 1, **characterized in that** the first main tank (10) and the auxiliary tank (30) must be filled with a predetermined amount of liquid, while the second main tank (20) is left without liquid.

9. The system for storing and generating energy according to claim 1, **characterized in that** the liquid is any liquid that is not mixable with the working fluid that provides the pressure.

10. The system to store and generate energy according to claim 9, **characterized in that** the liquid is water and the working fluid is gaseous air or gaseous nitrogen.

11. A method to store and generate energy, where a pressure generated by a fluid is released into a liquid circuit which in turn moves a liquid turbine to generate energy, **characterized in that** it comprises the following stages:
a) provide a system that comprises a first main tank (10) of liquid with a predetermined level of liquid inside and a second main tank (20) of liquid without liquid inside; an auxiliary tank (30) of liquid with a predetermined level of liquid inside it; a turbine (40) of liquid located between the first (10) and second (20) main tanks, and at a lower level than a bottom level of the first (10) and second (20) main tanks and the auxiliary tank (30), to ensure that the working fluid forces the liquid through the turbine (40 ) and not in the opposite sense, a network of pipes with their respective valves, including inlet valves, outlet valves, control valves as well as ventilation valves; where the operation is performed in short cycles and at a constant pressure by means of a control system that acts on at least one pressure regulating valve;
c) pressurize the first main tank (10), the auxiliary tank (30) and the network of pipes to an operating pressure;
d) open a first main tank to turbine outlet valve (VS₁₀₋₄₀), a second main tank inlet valve (VE₂₀) and a second main tank ventilation valve (VS_{20At}) so that the liquid moves from the first tank main tank (10), through the first main tank to turbine outlet valve (VS₁₀₋₄₀), up to the turbine (40) and then, through the second main tank inlet valve (VE₂₀) it is discharged into the second main tank (20), while the second main tank ventilation valve (VS_{20At}) allows that the second main tank (20) is filled up without increasing the pressure;
e) control the pressure of the first main tank (10) through a first main tank control valve (VC₁₀) that controls the pressure as the liquid level decreases, thus ensuring a stable working pressure;
f) close the first main tank to turbine outlet valve (VS₁₀₋₄₀), the second main tank inlet valve (VE₂₀) and the second main tank ventilation valve (VS_{20At}) and open the auxiliary tank to turbine outlet valve (VS₃₀₋₄₀) to allow the auxiliary tank (30) to feed the turbine (40), during the transition from one discharge mode to another, while a new operating cycle is initiated;
g) open a first main tank ventilation valve (VS_{10At} ) and pressurize the second main tank (20) to the operating pressure by means of a second main tank control valve (VC₂₀);
h) open a first main tank inlet valve (VE₁₀) so that the flow can be discharged into the first main tank (10) that is already vented or is already at atmospheric pressure;
i) open an auxiliary tank ventilation valve (VS_{30At}) to ventilate the pressure from the emptied auxiliary tank (30) and close the auxiliary tank to turbine outlet valve (VS₃₀₋₄₀);
j) open a second main tank to turbine outlet valve (VS₂₀₋₄₀) to feed the turbine (40) from the liquid coming from the discharge of the second main tank (20);
k) close a first main tank to auxiliary tank outlet valve (VS₁₀₋₃₀) when the auxiliary tank (30) is at the predetermined liquid level of stage a), where this condition occurs when the liquid level in the first main tank (10) has reached the necessary level to allow that the water enters into the auxiliary tank (30) by gravity;
l) control the pressure of the second main tank (20) through the second main tank control valve which controls the pressure as the liquid level lowers, thus ensuring a stable working pressure; and
m) close all opened valves and start the stages from stage e) to stage m).

12. The method for storing and generating energy according to Claim 11, **characterized in that** it also comprises pressurizing a primary tank (50) of high pressure by means of a compressor (60), or to store a gas or gas mixture at cryogenic temperature, before stage c).

13. The method to store and generate energy according to Claim 11, **characterized in that** the filling of the auxiliary tank to its predetermined level in stage a), according to stage k), is done when the liquid level of the first main tank (10) has reached the necessary level to allow that the water enters in the auxiliary tank (30), by gravity.

14. The method for storing and generating energy according to Claim 11, **characterized in that** the control system is configured to execute steps c) to m).

## Patentansprüche

1. System zum Speichern und Erzeugen von Energie, wobei ein durch ein Arbeitsfluid erzeugter Druck in einem Flüssigkeitskreislauf freigesetzt wird, der wiederum eine Flüssigkeitsturbine zur Energieerzeugung antreibt, wobei das System Folgendes umfasst:
einen ersten Flüssigkeitshaupttank (10);
einen zweiten Flüssigkeitshaupttank (20);
einen Flüssigkeitszusatztank (30);
und wobei sich die Flüssigkeitsturbine (40) zwischen dem ersten (10) und zweiten (20) Haupttank und auf einer niedrigeren Ebene als der Boden des ersten (10) und zweiten (20) Haupttanks und des Zusatztanks (30) befindet, um sicherzustellen, dass der Druck innerhalb der Tanks die Flüssigkeit durch die Turbine (40) drückt, und
ein Netz aus Rohrleitungen mit ihren entsprechenden Ventilen, einschließlich Einlassventilen, Auslassventilen, Steuerventilen sowie Entlüftungsventilen; wobei der Betrieb in kurzen Zyklen und bei einem konstanten Arbeitsdruck mithilfe eines Steuersystems durchgeführt wird, das auf mindestens ein Druckregulierungsventil einwirkt, das den Arbeitsdruck des Systems bereitstellt;
**dadurch gekennzeichnet, dass** der Zusatztank (30) angeordnet ist, um die Turbine (40) nur intermittierend zwischen Zyklen zu betreiben und zu speisen, während das System seine Betriebsrichtung in eine Richtung oder in die entgegengesetzte Richtung ändert, um dem System Zeit zu verschaffen, den Zyklus ohne Verlust bei der Energieerzeugung neu zu starten.

2. System zum Speichern und Erzeugen von Energie nach Anspruch 1, **dadurch gekennzeichnet, dass** der Druck innerhalb der Tanks durch verdichtete Luft erzeugt wird.

3. System zur Energiespeicherung und -erzeugung nach Anspruch 2, **dadurch gekennzeichnet, dass** es außerdem einen Verdichter (60) und einen primären Hochdrucktank (50) für die Produktion der verdichteten Luft beinhaltet.

4. System zur Energiespeicherung und -erzeugung nach Anspruch 2, **dadurch gekennzeichnet, dass** die verdichtete Luft durch Reste verdichteter Luft aus externen Quellen bereitgestellt ist.

5. System zur Energiespeicherung und -erzeugung nach Anspruch 1, **dadurch gekennzeichnet, dass** der Druck innerhalb der Tanks durch eine kyrogene Flüssigkeit erzeugt wird, die sich erwärmt und ausdehnt, wenn sie in die Tanks eingespritzt wird, wodurch Druck erzeugt wird.

6. System zur Energiespeicherung und -erzeugung nach Anspruch 1, **dadurch gekennzeichnet, dass** die jeweiligen Ventile des Rohrleitungsnetzes geöffnet oder geschlossen werden, um die Bewegung eines Flüssigkeitsstroms zwischen dem ersten Haupttank und dem zweiten Haupttank (20) durch die Turbine (40) zu ermöglichen.

7. System zur Energiespeicherung und -erzeugung nach Anspruch 1, **dadurch gekennzeichnet, dass** ein derartiger Zusatztank (30) nur arbeitet, während das System aus dem Betreiben in einer Richtung oder in der entgegengesetzten Richtung wechselt, um Flüssigkeit zwischen dem ersten Haupttank (10) und dem zweiten Haupttank (20) zu übertragen.

8. System zur Energiespeicherung und -erzeugung nach Anspruch 1, **dadurch gekennzeichnet, dass** der erste Haupttank (10) und der Zusatztank (30) mit einer vorbestimmten Flüssigkeitsmenge gefüllt sein müssen, während der zweite Haupttank (20) keine Flüssigkeit aufweist.

9. System zum Speichern und Erzeugen von Energie gemäß Anspruch 1, **dadurch gekennzeichnet, dass** die Flüssigkeit eine beliebige Flüssigkeit ist, die nicht mit dem Arbeitsfluid mischbar ist, das den Druck bereitstellt.

10. System zur Energiespeicherung und -erzeugung nach Anspruch 9, **dadurch gekennzeichnet, dass** die Flüssigkeit Wasser ist und das Arbeitsfluid gasförmige Luft oder gasförmiger Stickstoff ist.

11. Verfahren zur Energiespeicherung und -erzeugung, wobei ein durch ein Fluid erzeugter Druck in einem Flüssigkeitskreislauf freigesetzt wird, der wiederum eine Flüssigkeitsturbine zur Energieerzeugung antreibt, **dadurch gekennzeichnet, dass** es die folgenden Stufen umfasst:
a) Bereitstellen eines Systems, das Folgendes umfasst: einen ersten Flüssigkeitshaupttank (10) mit einem vorbestimmten Flüssigkeitsniveau darin und einen zweiten Flüssigkeitshaupttank (20) ohne Flüssigkeit darin; einen Flüssigkeitszusatztank (30) mit einem vorbestimmten Flüssigkeitsniveau in diesem; eine Flüssigkeitsturbine (40), die sich zwischen dem ersten (10) und zweiten (20) Haupttank und auf einer niedrigeren Ebene als ein Bodenniveau des ersten (10) und zweiten (20) Haupttanks und des Zusatztanks (30) befindet, um sicherzustellen, dass das Arbeitsfluid die Flüssigkeit durch die Turbine (40) und nicht in die entgegengesetzt Richtung drückt, und ein Netz aus Rohrleitungen mit ihren entsprechenden Ventilen, einschließlich Einlassventilen, Auslassventilen, Steuerventilen sowie Entlüftungsventilen; wobei der Betrieb in kurzen Zyklen und bei einem konstanten Druck mithilfe eines Steuersystems durchgeführt wird, das auf mindestens ein Druckregulierungsventil einwirkt;
c) Unterdrucksetzen des ersten Haupttanks (10), des Zusatztanks (30) und des Netzes aus Rohrleitungen auf einen Betriebsdruck;
d) Öffnen eines Auslassventils (VS₁₀₋₄₀) von dem ersten Haupttank zu der Turbine, eines Einlassventils (VE₂₀) des zweiten Haupttanks und eines Entlüftungsventils (VS_{20At}) des zweiten Haupttanks, sodass sich Flüssigkeit von dem ersten Haupttank (10) durch das Auslassventil (VS₁₀₋₄₀) von dem ersten Haupttank zu der Turbine und hinauf zu der Turbine (40) bewegt und dann durch das Einlassventil (VE₂₀) des zweiten Haupttanks in den zweiten Haupttank (20) abgelassen wird, während das Entlüftungsventil (VS_{20At}) des zweiten Haupttanks ermöglicht, dass der zweite Haupttank (20) aufgefüllt wird, ohne den Druck zu erhöhen;
e) Steuern des Drucks des ersten Haupttanks (10) durch ein Steuerventil (VC₁₀) des ersten Haupttanks, das den Druck steuert, wenn das Flüssigkeitsniveau abnimmt, wodurch ein stabiler Arbeitsdruck sichergestellt wird;
f) Schließen des Auslassventils (VS₁₀₋₄₀) von dem ersten Haupttank zu der Turbine, des Einlassventils (VE₂₀) des zweiten Haupttanks und des Entlüftungsventils (VS_{20At}) des zweiten Haupttanks und Öffnen des Auslassventils (VS₃₀₋₄₀) von dem Zusatztank zu der Turbine, um zu ermöglichen, dass der Zusatztank (30) die Turbine (40) während des Übergangs von einem Ablassmodus zu einem anderen speist, während ein neuer Betriebszyklus eingeleitet wird;
g) Öffnen eines Entlüftungsventils (VS_{10At}) des ersten Haupttanks und Unterdrucksetzen des zweiten Haupttanks (20) auf den Betriebsdruck mithilfe eines Steuerventils des zweiten Haupttanks;
h) Öffnen eines Einlassventils (VE₁₀) des ersten Haupttanks, sodass der Strom in den ersten Haupttank (10) abgelassen werden kann, der bereits entlüftet ist oder sich bereits auf Atmosphärendruck befindet;
i) Öffnen eines Entlüftungsventils (VS_{30At}) des Zusatztanks, um den Druck aus dem entleerten Zusatztank (30) zu entlüften, und Schließen des Auslassventils (VS₃₀₋₄₀) von dem Zusatztank zu der Turbine;
j) Öffnen eines zweiten Auslassventils (VS₂₀₋₄₀) von dem zweiten Haupttank zu der Turbine, um die Turbine (40) mit der Flüssigkeit, die aus dem Ablassen des zweiten Haupttanks (20) stammt, zu speisen;
k) Schließen eines Auslassventils (VS₁₀₋₃₀) von dem ersten Haupttank zu dem Zusatztank, wenn sich der Zusatztank (30) auf dem vorbestimmten Flüssigkeitsniveau von Stufe a) befindet, wobei dieser Zustand eintritt, wenn das Flüssigkeitsniveau in dem ersten Haupttank (10) das notwendige Niveau erreicht hat, um zu ermöglichen, dass das Wasser durch Schwerkraft in den Zusatztank (30) eintritt;
l) Steuern des Drucks des zweiten Haupttanks (20) durch das Steuerventil des zweiten Haupttanks, das den Druck steuert, wenn das Flüssigkeitsniveau geringer wird, wodurch ein stabiler Arbeitsdruck sichergestellt wird; und
m) Schließen aller geöffneten Ventile und Beginnen der Stufen von Stufe e) bis Stufe m).

12. Verfahren zum Speichern und Erzeugen von Energie nach Anspruch 11, **dadurch gekennzeichnet, dass** es außerdem Unterdrucksetzen eines primären Tanks (50) mit hohem Druck mithilfe eines Verdichters (60) oder Speichern eines Gases oder Gasgemischs bei kyrogener Temperatur vor Stufe c) umfasst.

13. Verfahren zur Energiespeicherung und -erzeugung nach Anspruch 11, **dadurch gekennzeichnet, dass** das Füllen des Zusatztanks auf sein vorbestimmtes Niveau in Stufe a) entsprechend Stufe k) vorgenommen wird, wenn das Flüssigkeitsniveau des ersten Haupttanks (10) das notwendige Niveau erreicht hat, um zu ermöglichen, dass das Wasser durch Schwerkraft in den Zusatztank (30) eintritt.

14. Verfahren zum Speichern und Erzeugen von Energie nach Anspruch 11, **dadurch gekennzeichnet, dass** das Steuersystem dazu konfiguriert ist, Schritte c) bis m) auszuführen.

## Revendications

1. Système de stockage et de génération d'énergie, où une pression générée par un fluide de travail est libérée dans un circuit de liquide qui à son tour déplace une turbine à liquide pour générer de l'énergie, le système comprenant :
un premier réservoir principal (10) de liquide ;
un second réservoir principal (20) de liquide ;
un réservoir auxiliaire (30) de liquide ;
et moyennant quoi la turbine à liquide (40) est située entre les premier (10) et second (20) réservoirs principaux, et à un niveau inférieur au fond des premier (10) et second (20) réservoirs principaux et du réservoir auxiliaire (30), pour assurer que la pression à l'intérieur des réservoirs force le liquide à travers la turbine (40)et
un réseau de canalisations avec leurs vannes respectives, comportant des vannes d'entrée, des vannes de sortie, des vannes de régulation ainsi que des vannes de ventilation ; où l'opération est effectuée en cycles courts et à une pression de travail constante au moyen d'un système de régulation agissant sur au moins une soupape de régulation de pression, qui fournit la pression de travail du système ;
**caractérisé en ce que** le réservoir auxiliaire (30) est agencé pour faire fonctionner et alimenter la turbine (40) uniquement par intermittence, entre cycles, tandis que le système change de direction de fonctionnement dans une direction ou dans la direction opposée, afin de donner au système le temps de redémarrer le cycle sans perte de production d'énergie.

2. Système de stockage et de génération d'énergie selon la revendication 1 **caractérisé en ce que** la pression à l'intérieur des réservoirs est générée par de l'air comprimé.

3. Système de stockage et de génération d'énergie selon la revendication 2, **caractérisé en ce qu'**il comporte également un compresseur (60) et un réservoir primaire haute pression (50) pour la production de l'air comprimé.

4. Système de stockage et de génération d'énergie selon la revendication 2, **caractérisé en ce que** l'air comprimé est fourni par des résidus d'air comprimé provenant de sources externes.

5. Système de stockage et de génération d'énergie selon la revendication 1, **caractérisé en ce que** la pression à l'intérieur des réservoirs est générée par un liquide cryogénique qui, lorsqu'il est injecté dans les réservoirs, s'échauffe et se dilate en générant une pression.

6. Système de stockage et de génération d'énergie selon la revendication 1, **caractérisé en ce que** les vannes respectives dudit réseau de canalisations sont ouvertes ou fermées pour permettre le mouvement d'écoulement de liquide entre le premier réservoir principal et le second réservoir principal (20) à travers la turbine (40).

7. Système de stockage et de production d'énergie selon la revendication 1, **caractérisé en ce qu'**un tel réservoir auxiliaire (30) ne fonctionne que lorsque le système change d'un fonctionnement dans une direction ou dans la direction opposée, pour le transfert de liquide entre le premier réservoir principal réservoir (10) et le second réservoir principal (20).

8. Système pour stocker et générer de l'énergie selon la revendication 1, **caractérisé en ce que** le premier réservoir principal (10) et le réservoir auxiliaire (30) doivent être remplis d'une quantité prédéterminée de liquide, tandis que le second réservoir principal (20) est laissé sans liquide.

9. Système de stockage et de génération d'énergie selon la revendication 1, **caractérisé en ce que** le liquide est tout liquide non miscible avec le fluide de travail qui fournit la pression.

10. Système de stockage et de génération d'énergie selon la revendication 9, **caractérisé en ce que** le liquide est de l'eau et le fluide de travail est de l'air gazeux ou de l'azote gazeux.

11. Procédé de stockage et de génération d'énergie, dans lequel une pression générée par un fluide est libérée dans un circuit de liquide qui à son tour déplace une turbine à liquide pour générer de l'énergie, **caractérisé en ce qu'**il comprend les étapes suivantes :
a) la fourniture d'un système qui comprend un premier réservoir principal (10) de liquide avec un niveau prédéterminé de liquide à l'intérieur et un second réservoir principal (20) de liquide sans liquide à l'intérieur ; un réservoir auxiliaire (30) de liquide avec un niveau prédéterminé de liquide à l'intérieur ; une turbine (40) de liquide située entre les premier (10) et second (20) réservoirs principaux, et à un niveau inférieur à un niveau inférieur des premier (10) et second (20) réservoirs principaux et du réservoir auxiliaire (30), pour assurer que le fluide de travail force le liquide à travers la turbine (40) et non dans le sens inverse, un réseau de canalisations avec leurs vannes respectives, comportant des vannes d'entrée, des vannes de sortie, des vannes de régulation ainsi que des vannes de ventilation ; où l'opération est effectuée en cycles courts et à pression constante au moyen d'un système de régulation qui agit sur au moins une vanne de régulation de pression ;
c) la mise sous pression du premier réservoir principal (10), du réservoir auxiliaire (30) et du réseau de canalisations à une pression de fonctionnement ;
d) l'ouverture d'une vanne de sortie du premier réservoir principal vers la turbine (VS₁₀₋₄₀), d'une vanne d'entrée du second réservoir principal (VE₂₀) et d'une vanne de ventilation du second réservoir principal (VS_{20At}) de sorte que le liquide s'écoule du premier réservoir principal(10), à travers la vanne de sortie du premier réservoir principal vers la turbine (VS₁₀₋₄₀), jusqu'à la turbine (40), puis à travers la vanne d'entrée de second réservoir principal (VE₂₀), il est évacué dans le second réservoir principal (20), tandis que la vanne de ventilation de second réservoir principal (VS_{20At}) permet que le second réservoir principal (20) soit rempli sans augmenter la pression ;
e) la régulation de la pression du premier réservoir principal (10) à travers une vanne de régulation du premier réservoir principal (VC₁₀) qui régule la pression lorsque le niveau de liquide diminue, assurant ainsi une pression de travail stable ;
f) la fermeture de la vanne de sortie du premier réservoir principal vers la turbine (VS₁₀₋₄₀), de la vanne d'entrée de second réservoir principal (VE₂₀) et de la vanne de ventilation du second réservoir principal (VS_{20At}) et l'ouverture de la vanne de sortie du réservoir auxiliaire vers la turbine (VS₃₀₋₄₀) pour permettre au réservoir auxiliaire (30) d'alimenter la turbine (40), lors du passage d'un mode d'évacuation à un autre, tandis qu'un nouveau cycle de fonctionnement est initié ;
g) l'ouverture d'une vanne de ventilation du premier réservoir principal (VS_{10At}) et la mise sous pression du second réservoir principal (20) à la pression de fonctionnement au moyen d'une seconde vanne de régulation du réservoir principal (VC20) ;
h) l'ouverture d'une vanne d'entrée du premier réservoir principal (VE10) de sorte que le débit puisse être évacué dans le premier réservoir principal (10) qui est déjà purgé ou déjà à la pression atmosphérique ;
i) l'ouverture d'une vanne de ventilation du réservoir auxiliaire (VS30A1) pour ventiler la pression à partir du réservoir auxiliaire vidé (30) et fermer la vanne de sortie du réservoir auxiliaire vers la turbine (VS30-40) ;
j) l'ouverture d'une vanne de sortie du second réservoir principal vers la turbine (VS20-40) pour alimenter la turbine (40) à partir du liquide provenant de l'évacuation du second réservoir principal (20) ;
k) la fermeture d'une vanne de sortie du premier réservoir principal vers le réservoir auxiliaire (VS 10-30) lorsque le réservoir auxiliaire (30) est au niveau de liquide prédéterminé selon l'étape a), où cette condition se produit lorsque le niveau de liquide dans le premier réservoir principal (10) a atteint le niveau nécessaire pour permettre que l'eau entre dans le réservoir auxiliaire (30) par gravité ;
l) la régulation de la pression du second réservoir principal (20) à travers la vanne de régulation du second réservoir principal (VC20) qui régule la pression lorsque le niveau de liquide baisse, assurant ainsi une pression de travail stable ; et
m) la fermeture de toutes les vannes ouvertes et le démarrage des étapes à partir de l'étape e) à l'étape m).

12. Procédé de stockage et de génération d'énergie selon la revendication 11, **caractérisé en ce qu'**il comprend également la mise sous pression d'un réservoir primaire (50) haute pression au moyen d'un compresseur (60), ou le stockage d'un gaz ou mélange gazeux à température cryogénique, avant l'étape c).

13. Procédé de stockage et de génération d'énergie selon la revendication 11, **caractérisé en ce que** le remplissage du réservoir auxiliaire à son niveau prédéterminé à l'étape a), selon l'étape k), se fait lorsque le niveau de liquide du premier réservoir principal (10) a atteint le niveau nécessaire pour permettre que l'eau entre dans le réservoir auxiliaire (30) par gravité.

14. Procédé de stockage et de génération d'énergie selon la revendication 11, **caractérisé en ce que** le système de régulation est configuré pour exécuter les étapes c) à m).
